# EUROPEAN PATENT APPLICATION

(11) **EP 1 657 057 A2**
(43) Date of publication of application: **17.05.2006**
(21) Application number: 05024561.2
(22) Date of filing: 10.11.2005
(51) Int. Cl.: B41F 35/00, B44C 1/17, G01N 3/08, G01L 1/00, C09J 7/02

(54) **Pressure-sensitive adhesive sheet for removing solvent-containing substance**

(30) Priority: 12.11.2004 JP 2004329289; 07.09.2005 JP 2005259058
(71) Applicant: NITTO DENKO CORPORATION, Osaka (JP)
(72) Inventor: Yoneda, Masanobu, Ibaraki-shi, Osaka (JP)
(74) Representative: Grünecker, Kinkeldey, Stockmair & Schwanhäusser Anwaltssozietät

(57) **Abstract**

A pressure-sensitive adhesive sheet for removing a solvent-containing substance contains a substrate and a pressure-sensitive adhesive layer formed on at least one side of the substrate, wherein a maximum value of a stress at the time when a cylindrical article (diameter of 20 mm, height of 25 mm) is compressed from one round opening side of cylindrical one at a compression rate of 10 mm/min under conditions of a temperature of 23±2°C and a relative humidity of 50±5% is 0.8 N/25 mm or more, the cylindrical article being obtained by fixing the pressure-sensitive adhesive sheet for removing a solvent-containing substance (65.8 mm × 25 mm) in a cylindrical state where edge parts thereof in the machine direction are overlapped each other in a width of 3 mm.

## Description

### FIELD OF THE INVENTION

The present invention relates to a pressure-sensitive adhesive sheet for removing a solvent-containing substance, as a cleaning pressure-sensitive adhesive sheet for removing a solvent-containing substance, such as a paste (an ink) turned about the back of a screen printing plate for screen printing, an ink deposited on rollers of a printing machine for offset printing, gravure printing, flexographic printing, or the like, an ink deposited near the jet orifice of an ink jet printer, or the like as well as an ink for an ink-jet printer and a paint. The invention also relates to a method for cleaning a screen printing plate.

### BACKGROUND OF THE INVENTION

Solvent-containing substances, for example, semisolid substances in wet conditions containing solvents, such as pastes and inks, are widely used in the fields of printing, paints and adhesives. However, when these solvent-containing substances are excessively present in a predetermined region or are present in an undesired region, there are apt to happen such various problems that they stain machines, instruments and hands or they deteriorate quality of products. For example, when a certain number of printing operations is performed in screen printing, a paste (an ink) turns about the back of a screen printing plate to stain a material to be printed or blur is resulted on a printed image, whereby precise and beautiful printing cannot be achieved.

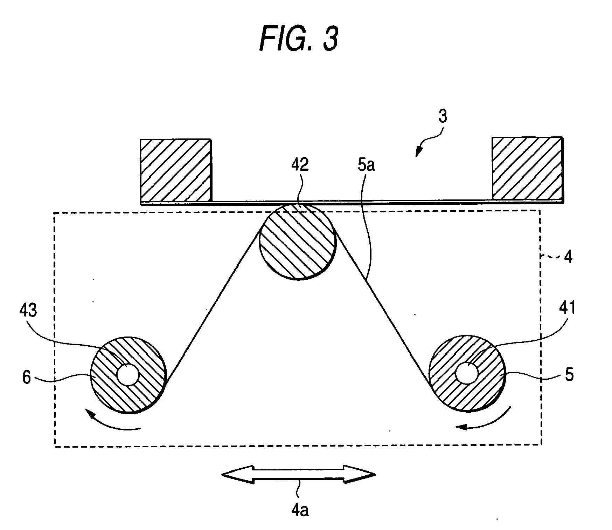

Heretofore, as shown in FIG. 3, in order to prevent blur and the like in the screen printing as such, there has been known a method wherein a paste turning about the back of a plate is removed using a pressure-sensitive adhesive sheet. For example, there has been proposed a pressure-sensitive adhesive sheet for cleaning a screen printing plate having a high cleaning effect, which is capable of surely adhering and removing the paste turning about the back of the screen printing plate without detaching an emulsifier or the like of the screen printing plate (refer to Japanese Patent No. 3281323).

FIG. 3 is a schematic diagram illustrating one example of a method of removing the paste turning about the back of a screen printing plate using a pressure-sensitive adhesive sheet. In FIG. 3, 3 is a screen plate, 4 is a cleaning unit, 41 is a run-out roll, 42 is a cleaning roll, 43 is a winding roll, 4a is a moving direction of the cleaning unit, 5 is a pressure-sensitive adhesive sheet for cleaning the screen printing plate attached to the run-out roll, 5a is a surface of an pressure-sensitive adhesive layer (pressure-sensitive adhesive surface) of the pressure-sensitive adhesive sheet 5, and 6 is a pressure-sensitive adhesive sheet wound up after run-out and use of the pressure-sensitive adhesive sheet 5. In FIG. 3, the cleaning unit 4 is constituted by the run-out roll 41, the cleaning roll 42 and the winding roll 43 and is movable in the directions of the moving direction 4a (right and left directions in FIG. 3). Moreover, in the cleaning unit 4, the pressure-sensitive adhesive sheet 5 wound up in a roll form is attached to the run-out roll 41 and the pressure-sensitive adhesive sheet 5 which have run out is wound up by the winding roll 43 passing on the cleaning roll 42. On this occasion, the pressure-sensitive adhesive sheet 5 is moved with pushed up by the cleaning roll 42 so that the pressure-sensitive adhesive surface 5a comes into contact with the back of the screen plate 3. Therefore, the pressure-sensitive adhesive sheet 5 is moved from one end of the screen plate to the other, a new surface of the sheet coming in contact with the back of the screen plate 3. Thereby, the solvent-containing substance such as the paste turning about the back of the screen printing plate 3 is removed. In this connection, the cleaning roll 42 shown in FIG. 3 is made of urethane rubber.

However, at the time when a solvent-containing substance such as a paste is removed using a pressure-sensitive adhesive sheet for removing a solvent-containing substance such as a pressure-sensitive adhesive sheet for cleaning a screen printing plate as mentioned above, when the width of the pressure-sensitive adhesive sheet for removing a solvent-containing substance is broadened, deformation (creases, folds, etc.) of the pressure-sensitive adhesive sheet for removing a solvent-containing substance is apt to result in. Owing to the deformation, it becomes impossible to adhere the pressure-sensitive adhesive sheet for removing a solvent-containing substance to the back of the screen printing plate cleanly or closely and thus uneven adhesion is resulted, so that removability of the solvent-containing substance decreases and an insufficient removal occurs in some case. Therefore, by adjusting apparatus conditions such as tension and speed control on all such occasions, by altering an apparatus with changing a pass line or adhesion system, or by replacing the pressure-sensitive adhesive sheet for removing a solvent-containing substance, occurrence of the insufficient removal has been prevented.

### SUMMARY OF THE INVENTION

Accordingly, an object of the invention is to provide a pressure-sensitive adhesive sheet for removing a solvent-containing substance capable of restraining or preventing insufficient removal resulting from the uneven adhesion and capable of removing the solvent-containing substance effectively at the time when a solvent-containing substance such as a paste turning about the back of a screen printing plate is removed as well as a method for cleaning a screen printing plate using the pressure-sensitive adhesive sheet for removing a solvent-containing substance.

As a result of extensive studies for achieving the above object, the present inventors have found that, by controlling a stiffness of a pressure-sensitive adhesive sheet so as to be a predetermined value, a solvent-containing substance such as a paste turning about the back of a screen printing plate can be efficiently removed with adhering the pressure-sensitive adhesive sheet to the back of the screen printing plate without resulting in uneven adhesion. The invention is accomplished based on these findings.

Namely, the invention provides a pressure-sensitive adhesive sheet for removing a solvent-containing substance comprising a substrate and a pressure-sensitive adhesive layer formed on at least one side of the substrate, wherein a maximum value of a stress at the time when a cylindrical article (diameter of 20 mm, height of 25 mm) is compressed from one round opening side of cylindrical one at a compression rate of 10 mm/min under conditions of a temperature of 23±2°C and a relative humidity of 50±5% is 0.8 N/25 mm or more, the cylindrical article being obtained by fixing a pressure-sensitive adhesive sheet for removing a solvent-containing substance (65.8 mm x 25 mm) in a cylindrical state where edge parts thereof in the machine direction are overlapped each other in a width of 3 mm.

As the above pressure-sensitive adhesive sheet for removing a solvent-containing substance, it is preferred that an average thickness of the substrate is 120 µm or less and a difference between a maximum value and a minimum value of the thickness in the crosswise direction is 6 µm or less. Moreover, a length in the crosswise direction may be 1000 mm or more.

The pressure-sensitive adhesive sheet for removing a solvent-containing substance of the invention can be suitably used as a pressure-sensitive adhesive sheet for cleaning a screen printing plate.

The invention also provides a method for cleaning a screen printing plate which comprises removal of a solvent-containing substance deposited on the back of the screen printing plate by adhering the pressure-sensitive adhesive sheet for removing a solvent-containing substance to the back of the screen printing plate in a form that the surface of a pressure-sensitive adhesive layer comes into contact therewith and subsequently peeling the sheet off.

### BRIEF DESCRIPTION OF THE DRAWINGS

FIGs. 1A and 1B are drawings relating to a measuring sample at measurement of a stiffness of a pressure-sensitive adhesive sheet for removing a solvent-containing substance.
FIG. 2 is a schematic diagram illustrating a method of measuring a stiffness of the pressure-sensitive adhesive sheet for removing a solvent-containing substance.
FIG. 3 is a schematic diagram illustrating one example of a method of removing the paste turning about the back of a screen printing plate using a pressure-sensitive adhesive sheet.

### Description of the Reference Numerals and Signs

- 1: pressure-sensitive adhesive sheet for removing a solvent-containing substance
- 2: cylindrical article formed with pressure-sensitive adhesive sheet for removing a solvent-containing substance 1
- 2a: lap part
- 2b: round opening part of cylindrical one
- 3: screen plate
- 4: cleaning unit
- 41: run-out roll
- 42: cleaning roll
- 43: winding roll
- 4a: moving direction of the cleaning unit
- 5: pressure-sensitive adhesive sheet for cleaning the screen printing plate attached to run-out roll
- 5a: surface of pressure-sensitive adhesive layer (pressure-sensitive adhesive surface) of pressure-sensitive adhesive sheet 5
- 6: pressure-sensitive adhesive sheet wound up after run-out and use of pressure-sensitive adhesive sheet 5

### DETAILED DESCRIPTION OF THE INVENTION

A pressure-sensitive adhesive sheet for removing a solvent-containing substance of the invention comprises a substrate and a pressure-sensitive adhesive layer formed on at least one side of the substrate, and it is important that a maximum value of a stress (or strength) (sometimes referred to as "stiffness") at the time when a cylindrical article (diameter of 20 mm, height of 25 mm) is compressed from one round opening side of cylindrical one at a compression rate of 10 mm/min under conditions of a temperature of 23±2°C and a relative humidity of 50±5% is 0.8 N/25 mm or more, preferably 1.0 N/25 mm or more, particularly 1.4 N/25 mm or more, the cylindrical article being obtained by fixing a pressure-sensitive adhesive sheet for removing a solvent-containing substance (65.8 mm x 25 mm) in a cylindrical state where edge parts thereof in the machine direction are overlapped each other in a width of 3 mm. An upper limit of the stiffness is not particularly limited but may be, for example, 15 N/25 mm or less, preferably 12 N/25 mm or less, more preferably 10 N/25 mm or less. When the stiffness of the pressure-sensitive adhesive sheet for removing a solvent-containing substance is less than 0.8 N/25 mm, the stress toward deformation decreases and creases and the like are apt to result in. For example, in the step of cleaning the back of a screen plate, the pressure-sensitive adhesive sheet for removing a solvent-containing substance is apt to deform on a pass line of an apparatus or at adhesion to the back of the screen plate, so that uneven adhesion tends to result in at the time when the back of the screen plate is cleaned by adhering the pressure-sensitive adhesive sheet for removing a solvent-containing substance to the back of the screen plate.

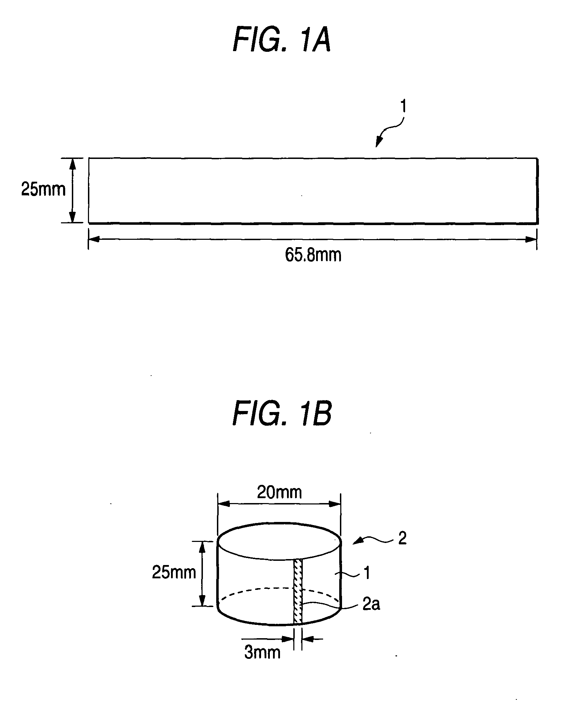

The stiffness of the pressure-sensitive adhesive sheet for removing a solvent-containing substance is typically measured as follows. First, the pressure-sensitive adhesive sheet for removing a solvent-containing substance is cut into a size of a length in the machine direction of 65.8 mm and a length in the crosswise direction of 25 mm, as shown in FIG. 1A. Then, as shown in FIG. 1B, edge parts of the cut pressure-sensitive adhesive sheet for removing a solvent-containing substance (65.8 mm x 25 mm) in the machine direction are overlapped each other in a width of 3 mm to form a cylindrical shape and the lap part is adhered with a double-sided pressure-sensitive adhesive tape (trade name "No. 500" manufactured by Nitto Denko Corporation; length of 25 mm, width of 3 mm), whereby there is manufactured a cylindrical article having a diameter of 20 mm and a height of 25 mm obtained by fixing a pressure-sensitive adhesive sheet for removing a solvent-containing substance in a cylindrical state where edge parts thereof in the machine direction are overlapped each other in a width of 3 mm.

On this occasion, in the case that the pressure-sensitive adhesive sheet for removing a solvent-containing substance has a constitution that a pressure-sensitive adhesive layer is formed only on one side of a substrate, the cylindrical article is manufactured by overlapping the edge parts in the machine direction each other in a width of 3 mm. Moreover, in the case that the surface of the pressure-sensitive adhesive layer of the pressure-sensitive adhesive sheet for removing a solvent-containing substance is protected with a release liner, the cylindrical article is manufactured by overlapping the edge parts in the machine direction each other in a width of 3 mm after the release line is peeled off.

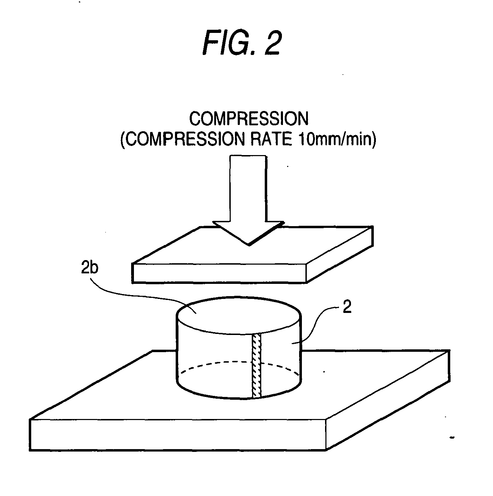

Subsequently, after the above cylindrical article (diameter of 20 mm, height of 25 mm) is allowed to stand under an atmosphere of a temperature of 23±2°C and a relative humidity of 50±5% for 24 hours, it is placed at a predetermined position in a form that round opening sides of a cylindrical one 2 are positioned up and down as shown in FIG. 2 under conditions of a temperature of 23±2°C and a relative humidity of 50±5% and a stress (or strength) (N/25 mm) is measured at the time when the cylindrical article is compressed from one round opening 2b side of cylindrical one of the cylindrical article 2 at a compression rate of 10 mm/min, a maximum value of the stress (or strength) being determined.

In this connection, FIGs. 1A and 1B are drawings relating to a measuring sample at the measurement of the stiffness of the pressure-sensitive adhesive sheet for removing a solvent-containing substance. FIG. 1A is a schematic diagram showing the pressure-sensitive adhesive sheet for removing a solvent-containing substance cut into a predetermined size at the measurement of the stiffness of the pressure-sensitive adhesive sheet for removing a solvent-containing substance and FIG. 1B is a schematic diagram showing the cylindrical article manufactured with the pressure-sensitive adhesive sheet for removing a solvent-containing substance according to FIG. 1A. In FIG. 1A and FIG. 1B, 1 is a pressure-sensitive adhesive sheet for removing a solvent-containing substance, 2 is a cylindrical article formed with the pressure-sensitive adhesive sheet for removing a solvent-containing substance, and 2a is a lap part. A size of the cylindrical article of the pressure-sensitive adhesive sheet for removing a solvent-containing substance 1 according to FIG. 1A has a length in the machine direction (MD direction) of 65.8 mm and a length in the crosswise direction (CD direction) of 25 mm. Moreover, the cylindrical article 2 according to FIG. 1B is a cylindrical article obtained by fixing a pressure-sensitive adhesive sheet for removing a solvent-containing substance 1 in a cylindrical state where edge parts thereof in the machine direction are overlapped each other in a width of 3 mm. Specifically, the edge parts of the pressure-sensitive adhesive sheet for removing a solvent-containing substance 1 in the machine direction are overlapped each other in a width of 3 mm to form a cylindrical shape and the lap part 2a is adhered with a double-sided pressure-sensitive adhesive tape (length of 25 mm, width of 3 mm; trade name "No. 500" manufactured by Nitto Denko Corporation), whereby the cylindrical article 2 is manufactured.

Moreover, FIG. 2 is a schematic diagram showing a method of measuring a stiffness of the pressure-sensitive adhesive sheet for removing a solvent-containing substance. In FIG. 2, 2 is a cylindrical article as mentioned above, 2b is a round opening part of cylindrical one in the cylindrical article 2. FIG. 2 shows a state that the cylindrical article 2 is placed at a predetermined position on a compression testing machine and is compressed from one round opening side of cylindrical one in the cylindrical article 2 at a compression rate of 10 mm/min.

### [Substrate]

In the pressure-sensitive adhesive sheet for removing a solvent-containing substance of the present invention, as the substrate, in addition to plastic substrates, various supports including porous substrates such as paper and nonwoven fabrics can be used but plastic substrates can be suitably used. Specifically, plastic materials constituting the above plastic substrates are not particularly limited as long as they can be formed in a shape of sheet, film, or the like. Examples thereof include polyolefins such as polyethylene, polypropylene, poly-1-butene, poly-4-methyl-1-pentene, ethylene-propylene copolymers, ethylene-1-butene copolymers, ethylene-vinyl acetate copolymers, ethylene-ethyl acrylate copolymers, and ethylene-vinyl alcohol copolymers; polyesters such as polyethylene terephthalate, polyethylene naphthalate, and polybutylene terephthalate; polyacrylates; polystyrene; polyamides such as polyamide 6, polyamide 6,6, and partially aromatic polyamides; polyvinyl chloride; polyvinylidene chloride; polycarbonate; and the like. The plastic materials may be used solely or in combination of two or more thereof. The plastic materials may have either form of a stretched form or a non-stretched form.

As the substrate, from the viewpoint that the stiffness of the pressure-sensitive adhesive sheet for removing a solvent-containing substance is 0.8 N/25 mm or more, among the plastic substrates, there can be suitably used hard plastic substrates and plastic substrates having a good flexibility. As the plastic materials, particularly, a polyethylene substrate and a polypropylene substrate are preferred.

The thickness of the substrate (average thickness) is not particularly limited but is desirably 120 µm or less, for example, 10 to 120 µm, preferably 100 µm or less, more preferably 60 µm or less. When the average thickness of the substrate exceeds 120 µm, the stiffness of the pressure-sensitive adhesive sheet for removing a solvent-containing substance tends to be 0.8 N/25 mm or more but the cost is high, so that the case is not practical.

With regard to the substrate, when the thickness decreases, the stiffness of the pressure-sensitive adhesive sheet for removing a solvent-containing substance tends to decrease. However, the stiffness of the pressure-sensitive adhesive sheet for removing a solvent-containing substance not only depends on the average thickness of the substrate but also depends on the kind of the substrate and the like. Therefore, although a lower limit of the average thickness of the substrate cannot be defined unconditionally, the average thickness of the substrate is preferably 25 µm or more, and furthermore, is suitably 30 µm or more. Therefore, the average thickness of the substrate is preferably 25 to 100 µm, more preferably 30 to 60 µm.

In the invention, from the viewpoint of restraining the insufficient removal owing to uneven adhesion, it is preferred to use a substrate excellent in thickness accuracy as the substrate. In particular, in the case that the average thickness of the substrate is 120 µm or less, it is desirable that the difference between a maximum value and a minimum value of the thickness in the crosswise direction (sometimes referred to as "difference in substrate thickness") is 6 µm or less, for example, 0 to 6 µm, preferably 0 to 5 µm, further preferably 0 to 4 µm as the substrate. In the case that the average thickness of the substrate is 120 µm or less, when the difference in substrate thickness exceeds 6 µm, the pressure-sensitive adhesive sheet for removing a solvent-containing substance is apt to deform owing to uneven thickness of the substrate, although it depends on the kind of the substrate.

In the invention, the average thickness of the substrate can be determined by measuring the thickness at five points in almost equal intervals in the crosswise direction and averaging the values. Moreover, the difference in substrate thickness can be determined by measuring the thickness at five points in almost equal intervals in the crosswise direction, determining a maximum value and a minimum value of the measured thickness, and calculating the difference between them (absolute value; namely the maximum value - the minimum value).

The width of the substrate is not particularly limited. In the invention, in the case that the width of the substrate is 1000 mm or more, usually 1000 to 2400 mm, the advantages of the invention become particularly clear.

The substrate may be any of forms of a single layer and plural layers. If necessary, the substrate may be subjected to release treatment with a release agent such as a silicone-based release agent, a fluorine-based release agent, a long-chain alkyl-based release agent, or a fatty acid amide-based release agent, silica powder, or the like; antifouling treatment; ready adhesion treatment such as acid treatment, alkali treatment, primer treatment, corona discharge treatment, plasma treatment, or ultraviolet irradiation treatment; antistatic treatment with an antistatic agent such as a coating-type antistatic agent, a kneading-type antistatic agent, or a vapor deposition-type antistatic agent; or the like, depending upon the type of the substrate or the like.

Moreover, in the substrate, if necessary, additives such as an antioxidant, an antiaging agent, a UV absorber, a plasticizer, a softener, a coloring agent, and a filler may be incorporated.

### [Pressure-sensitive adhesive layer]

In the pressure-sensitive adhesive sheet for removing a solvent-containing substance of the invention, a pressure-sensitive adhesive forming a pressure-sensitive adhesive layer is not particularly limited and it may be suitably selected from known pressure-sensitive adhesives, for example, acrylic pressure-sensitive adhesives, rubber-based pressure-sensitive adhesives, silicone-based pressure-sensitive adhesives, vinyl alkyl ether-based pressure-sensitive adhesives, polyester-based pressure-sensitive adhesives, polyamide-based pressure-sensitive adhesives, urethane-based pressure-sensitive adhesives, fluorine-based pressure-sensitive adhesives, and the like and used. The pressure-sensitive adhesives can be used solely or in combination of two or more thereof.

As pressure-sensitive adhesives, acrylic pressure-sensitive adhesives and rubber-based pressure-sensitive adhesives, particularly acrylic pressure-sensitive adhesives can be suitably used. In this connection, as acrylic pressure-sensitive adhesives, there can be suitably used an acrylic pressure-sensitive adhesive using an acrylic polymer as a base polymer using a (meth)acrylate as a main monomer component. Moreover, as rubber-based pressure-sensitive adhesives, there can be suitably used a rubber-based pressure-sensitive adhesive using a rubber component as a base polymer, such as natural rubber, a styrene-isoprene-styrene block copolymer (SIS block copolymer), a styrene-butadienestyrene block copolymer (SBS block copolymer), a styrene-ethylene·butylene-styrene block copolymer (SEBS block copolymer), styrene-butadiene rubber, polybutadiene, polyisoprene, polyisobutyrene, butyl rubber, chloroprene rubber, or silicone rubber.

Into the pressure-sensitive adhesives, there can be suitably added various additives hitherto known, for example, a tackifier, a surface lubricant, a leveling agent, an antioxidant, a corrosion inhibitor, a light stabilizer, a UV absorber, a polymerization inhibitor, a silane coupling agent, a plasticizer, a softener, an antistatic agent, a surfactant, a foaming agent, and powders, particulates or foils of an inorganic or organic filler, a metal powder and a pigment in accordance with the intended use.

The thickness of the pressure-sensitive adhesive layer is, for example, about 3 to 100 µm, preferably about 5 to 50 µm.

The pressure-sensitive adhesive layer is formed on at least one side of the substrate. The pressure-sensitive adhesive layer can be formed utilizing a known method for forming a pressure-sensitive adhesive layer. Specifically, utilizing a method for forming a pressure-sensitive adhesive layer by applying a pressure-sensitive adhesive on a predetermined surface of the substrate and drying and/or curing it or a method for forming the layer by applying a pressure-sensitive adhesive on a separator to form a pressure-sensitive adhesive layer and subsequently transferring the pressure-sensitive adhesive layer onto a predetermined surface of the substrate, the pressure-sensitive adhesive layer can be formed on at least one side of the substrate.

The pressure-sensitive adhesive layer may be any of forms of a single layer and plural layers. Moreover, the pressure-sensitive adhesive layer may be formed on the substrate through another layer unless the advantages of the invention are impaired.

### [Pressure sensitive adhesive sheet for removing solvent-containing substance]

The pressure-sensitive adhesive sheet for removing a solvent-containing substance of the invention contains a substrate and a pressure-sensitive adhesive layer formed on at least one side of the substrate. Namely, the pressure-sensitive adhesive sheet for removing a solvent-containing substance may be either of a pressure-sensitive adhesive sheet having a constitution wherein a pressure-sensitive adhesive layer is formed on one side of the substrate (substrate-attached single-sided pressure-sensitive adhesive sheet) or a pressure-sensitive adhesive sheet having a constitution wherein a pressure-sensitive adhesive layers are formed on both sides of the substrate (substrate-attached double-sided pressure-sensitive adhesive sheet). As the pressure-sensitive adhesive sheet for removing a solvent-containing substance of the invention, it is preferred to possess a constitution wherein a pressure-sensitive adhesive layer is formed on one side of the substrate.

Moreover, as the pressure-sensitive adhesive sheet for removing a solvent-containing substance of the invention, in view of improving performance for removing the solvent-containing substance, it is preferred to possess the following properties of (1) to (3).
(1) A property that an adhesive force before use as measured by a method in accordance with JIS Z 0237 is 3 to 400 cN/25 mm (3 to 400 gf/25 mm).
(2) A property that a solvent-absorbed amount of the pressure-sensitive adhesive layer is 5 g/m² or more at the time when immersed for 1 second in a mixed solvent of diethylene glycol monobutyl ether acetate/diethylene glycol monobutyl ether [9/1 (ratio by weight)] which is a solvent for screen printing inks.
(3) A property that an adhesive force after absorption of 5 g/m² of the solvent as measured by a method in accordance with JIS Z 0237 is 3 cN/25 mm or more.

In this connection, in the above property (1), a method of measuring the adhesive force before use is, specifically, as follows.

### (Method of measuring adhesive force before use)

A pressure-sensitive adhesive sheet for removing a solvent-containing substance is cut into a size of 25 mm x 150 mm in an atmosphere of a temperature of 23±2°C and a humidity of 50±5%RH and is attached under pressure to a material to be attached (SUS 430BA) by a reciprocating motion of a 2-kg roller. After 1 minute, the pressure-sensitive adhesive sheet for removing a solvent-containing substance is peeled off from the material to be attached, under an atmosphere of a temperature of 23±2°C and a humidity of 50±5%RH using a tensile testing machine at a tensile rate of 300 mm/min and peeling angle of 180°, whereby an adhesive force (N/25 mm) is determined.

Moreover, in the above property (2), a method of measuring the solvent-absorbed amount of the pressure-sensitive adhesive layer is, specifically, as follows.

### (Method of measuring solvent-absorbed amount of pressure-sensitive adhesive layer)

A pressure-sensitive adhesive sheet for removing a solvent-containing substance is cut into a size of 20 mm x 50 mm and its weight is measured. The pressure-sensitive adhesive sheet for removing a solvent-containing substance weighed beforehand is immersed for 1 second in a mixed solvent of diethylene glycol monobutyl ether acetate/diethylene glycol monobutyl ether [9/1 (ratio by weight)] which is a solvent for screen printing inks and taken out. Immediately, the solvent attached on the surface of the pressure-sensitive adhesive sheet for removing a solvent-containing substance is wiped off with waste cloth and then the weight is again measured, whereby an increase of the weight per unit area is calculated. In this connection, measuring conditions are a temperature of 23±2°C and a humidity of 50±5%RH.

Furthermore, in the above property (3), a method of measuring the adhesive force after absorption of 5 g/m² of the solvent is, specifically, as follows.

### (Method of measuring adhesive force after absorption of 5 g/m² of the solvent)

A mixed solvent of diethylene glycol monobutyl ether acetate/diethylene glycol monobutyl ether [9/1 (ratio by weight)] which is a solvent for screen printing inks is applied in an amount of 5 g/m² on a film made of polyethylene terephthalate by means of a wire bar. Thereto is adhered a pressure-sensitive adhesive sheet for removing a solvent-containing substance cut into a size of 25 mm x 150 mm. After the above mixed solvent is absorbed in the pressure-sensitive adhesive layer of the pressure-sensitive adhesive sheet for removing a solvent-containing substance in an amount of 5 g/m², the pressure-sensitive adhesive sheet for removing a solvent-containing substance is peeled off and the pressure-sensitive adhesive sheet for removing a solvent-containing substance is used as a measuring sample. For the measuring sample, an adhesive force is measured by the same method as the method at the time when an adhesive force before use is measured in the above property (1), whereby an adhesive force (N/25 mm) is determined.

In the pressure-sensitive adhesive sheet for removing a solvent-containing substance of the invention, as the adhesive force before use measured by the method in accordance with JIS Z 0237, particularly, the upper limit is suitably 300 cN/25 mm (300 gf/25 mm). When the adhesive force before use exceeds 400 cN/25 mm, it becomes difficult to peel off the pressure-sensitive adhesive sheet for removing a solvent-containing substance from the screen printing plate and there is a fear that an emulsifier is detached from the screen printing plate and defective printing occurs owing to a stretched screen caused by repeated operations. On the other hand, when the adhesive force before use of the pressure-sensitive adhesive sheet for removing a solvent-containing substance is less than 3 cN/25 mm, the solvent-containing substance (paste or the like) turning about the back is difficult to adhere to the pressure-sensitive adhesive surface and thus a desired cleaning effect is not obtained in some cases.

Moreover, in the pressure-sensitive adhesive sheet for removing a solvent-containing substance, when the solvent-absorbed amount of the pressure-sensitive adhesive layer {solvent-absorbed amount of the pressure-sensitive adhesive layer at the time when immersed for 1 second in a mixed solvent of diethylene glycol monobutyl ether acetate/diethylene glycol monobutyl ether [9/1 (ratio by weight)] which is a solvent for screen printing inks) is 5 g/m² or more, a sufficient effect is obtained. Furthermore, preferred is 6 g/m² or more and particularly, preferred is 7 g/m² or more.

In this connection, in the pressure-sensitive adhesive sheet for removing a solvent-containing substance, the adhesive force before use, the solvent-absorbed amount of the pressure-sensitive adhesive layer, and the adhesive force after absorption of 5 g/m² of the solvent can be adjusted by suitably selecting the kind and ratio of the monomer components constituting a pressure-sensitive adhesive (particularly, a resin as a base polymer) for forming the pressure-sensitive adhesive layer, the kind and ratio of a crosslinking agent, the glass transition temperature and molecular weight (weight average molecular weight) of the resin as a base polymer of the pressure-sensitive adhesive, the thickness of the pressure-sensitive adhesive layer, and the like.

Since the pressure-sensitive adhesive sheet for removing a solvent-containing substance having such properties (1) to (3) has an adhesive force before use of 400 cN/25 mm or less, there are not observed the detachment of an emulsifier from the screen printing plate and the occurrence of defective printing owing to a stretched screen, when the pressure-sensitive adhesive sheet for removing a solvent-containing substance is adhered to the back of the screen printing plate and subsequently peeled off. In addition, since the sheet can absorb the solvent contained in the paste (ink) for use in screen printing in an amount of 5 g/m² or more, by adhering the sheet to the back of the screen printing plate, almost all the solvent in the paste turning about the back of the screen printing plate is absorbed, whereby the paste can be solidified. Furthermore, even after the solvent is absorbed in a predetermined amount, since an adhesive force of 3 cN/25 mm or more is exhibited, solid matter after absorption of the solvent is removed through adhesion to the side of the pressure-sensitive adhesive sheet for removing a solvent-containing substance, so that a high cleaning effect is achieved.

The surface of the pressure-sensitive adhesive layer (pressure-sensitive adhesive surface) may be protected by a separator (release liner). The separator is not particularly limited and it may be suitably selected from known separators and used. As the separator, a substrate having a release treatment layer treated with a release treatment agent on at least one side can be suitably used. Also, there can be used a low adhesive substrate composed of a fluorine-based polymer such as polytetrafluoroethylene, polychlorotrifluoro-ethylene, polyvinyl fluoride, polyvinylidene fluoride, a tetrafluoroethylene-hexafluoropropylene copolymer, or a chlorofluoroethylene-vinylidene fluoride copolymer or a low adhesive substrate composed of a non-polar polymer, e.g., an olefinic resin such as polyethylene or polypropylene.

In the case that the separator has a constitution that a release treatment layer is formed on at least one side of a substrate, the substrate of the separator may be a paper or a nonwoven fabric but a plastic sheet or film can be suitably used in view of excellent surface smoothness. The plastic sheet or film as the substrate of the separator is not particularly limited. Examples thereof include a polyethylene sheet or film, a polypropylene sheet or film, a polybutene sheet or film, a polybutadiene sheet or film, a polymethylpentene sheet or film, a polyvinyl chloride sheet or film, a polyvinyl chloride-based copolymer sheet or film, a polyethylene terephthalate sheet or film, a polybutylene terephthalate sheet or film, a polyurethane sheet or film, an ethylene-vinyl acetate copolymer sheet or film, and the like. The thickness of the substrate is usually 5 to 200 µm, preferably 10 to 120 µm.

As the release treatment agent forming the release treatment layer, a known or conventional release treatment agent such as a silicone-based release treatment agent, a fluorine-based release treatment agent, a long-chain alkyl-based release treatment agent, a fatty acid amide-based release treatment agent, or a silica powder can be used.

The pressure-sensitive adhesive sheet for removing a solvent-containing substance may also have other layers such as intermediate layer and undercoated layer within such an extent that the advantage of the invention is not impaired. Specifically, a layer such as undercoated layer or intermediate layer may be formed between a substrate and a pressure-sensitive adhesive layer. When the pressure-sensitive adhesive sheet for removing a solvent-containing substance has such a constitution that a pressure-sensitive adhesive layer is formed on one side of the substrate, a back side treating layer may be formed on the back (a side which is opposite to the side on which the pressure-sensitive adhesive layer is formed) of the substrate. Such a back side treating layer may be formed with a known or common back side treating agent such as a silicone-based release treatment agent, a fluorine-based release treatment agent, a long-chain alkyl-based release treatment agent, a fatty acid amide-based release treatment agent, or a silica powder.

In the invention, the pressure-sensitive adhesive sheet for removing a solvent-containing substance may be formed in a roll-shaped wound form or may be formed in a form where sheets are laminated. Thus, the pressure-sensitive adhesive sheet for removing a solvent-containing substance of the present invention may be in a form of sheet, tape, etc. When the pressure-sensitive adhesive sheet for removing a solvent-containing substance is in a roll-shaped wound form, it is possible, for example, that a pressure-sensitive adhesive layer is wound in a roll shape under such a state of being protected by a release treatment layer formed on the back of the separator or the substrate, whereby a pressure-sensitive adhesive sheet for removing a solvent-containing substance in a state of being wound in a roll shape can be manufactured.

Depending upon the layer constitution and the like, the pressure-sensitive adhesive sheet for removing a solvent-containing substance may be manufactured in such a manner that, utilizing a known or conventional method such as a coating method, a pressure-sensitive adhesive layer is formed on at least one side of the substrate and, if necessary, a undercoating layer or back side treating layer is formed on a predetermined side. Incidentally, at the formation of the pressure-sensitive adhesive layer, a method for applying a pressure-sensitive adhesive composition is not particularly limited and, for example, there can be utilized a roll coating method, a gravure coating method, a reverse coating method, a roll brush method, a spay coating method, an air knife coating method, or the like method).

Since the pressure-sensitive adhesive sheet for removing a solvent-containing substance of the invention has a stiffness of 0.8 N/25 mm or more as mentioned above, at the time when a solvent-containing substance such as a paste turning about the back of the screen printing plate is removed, even when the width of the pressure-sensitive adhesive sheet for removing a solvent-containing substance is so broad as 1000 mm or more, deformation (creases, folds, etc.) of the pressure-sensitive adhesive sheet for removing a solvent-containing substance is difficult to result in and thus the pressure-sensitive adhesive sheet for removing a solvent-containing substance can be cleanly or closely adhered to the back of the screen printing plate, whereby the solvent-containing substance can be removed. Therefore, when the pressure-sensitive adhesive sheet for removing a solvent-containing substance of the invention is used, the solvent-containing substance can be effectively removed and hence process yield and operation rate of facilities can be improved.

### [Solvent-containing substance]

In the invention, the solvent-containing substance which is an object of removal is not particularly limited and examples thereof include a semisolid substance in a wet state containing a solvent, such as a paste, an ink, a starch, an adhesive and a paint. Specifically, examples of the solvent-containing substance include a paste (an ink) which is used for screen printing and an ink which is adhered to rolls of a printer such as an offset printer.

When the pressure-sensitive adhesive sheet for removing a solvent-containing substance is adhered, for example, to the back of a screen plate, the roll, or the like, it absorbs a solvent which is contained in a paste turning about the back of the screen plate or in ink adhered to the rolls, whereby the paste or the like can be solidified. Accordingly, the pressure-sensitive adhesive sheet for removing a solvent-containing substance of the invention is suitable, for example, for removal of a paste (an ink) which turns about the back of the screen printing plate, an ink which is deposited to the rolls of a printer such as an offset printer, ink stain about a jet orifice for ink of an ink jet printer, and the like. Namely, the pressure-sensitive adhesive sheet for removing a solvent-containing substance of the invention can be suitably used as a pressure-sensitive adhesive sheet for cleaning a screen printing plate.

Examples of the solvent contained in the above solvent-containing substance such as paste and ink include aliphatic hydrocarbons such as hexane, heptane and mineral spirit; alicyclic hydrocarbons such as cyclohexane; aromatic hydrocarbon such as toluene, xylene, solvent naphtha, tetralin and dipentene; alcohols such as methyl alcohol, ethyl alcohol, isopropyl alcohol, butyl alcohol, isobutyl alcohol, s-butyl alcohol, cyclohexyl alcohol, 2-methylcyclohexyl alcohol and tridecyl alcohol; esters such as methyl acetate, ethyl acetate, isopropyl acetate and butyl acetate; ketones such as acetone, methyl ethyl ketone, methyl isobutyl ketone, cyclohexanone, methylcyclohexanone, diacetone alcohol and isophorone; glycols such as ethylene glycol, propylene glycol, diethylene glycol, triethylene glycol and dipropylene glycol; glycol ethers such as butyl cellosolve, propylene glycol monomethyl ether, propylene glycol monoethyl ether, propylene glycol monobutyl ether and diethylene glycol monobutyl ether; glycol ether esters such as butyl cellosolve acetate, propylene glycol monomethyl ether acetate, propylene glycol monoethyl ether acetate and diethylene glycol monobutyl ether acetate; and water. In the case of ink for screen printing, medium-boiling point solvents (boiling point: about 120 to 230°C) and high-boiling point solvents (boiling point: about 230 to 320°C) are often used and examples thereof include diethylene glycol monobutyl ether acetate, diethylene glycol monobutyl ether, and the like (such as diethylene glycol monobutyl ether acetate/diethylene glycol monobutyl ether [9/1 (ratio by weight)].

### [Method for cleaning screen printing plate]

The method for cleaning a screen printing plate of the invention is a method for cleaning a screen printing plate which comprises removal of a solvent-containing substance deposited on the back of the screen printing plate by adhering the above pressure-sensitive adhesive sheet for removing a solvent-containing substance to the back of the screen printing plate in a form that the surface of a pressure-sensitive adhesive layer of the sheet comes into contact therewith and subsequently peeling the sheet off. Thus, since the pressure-sensitive adhesive sheet for removing a solvent-containing substance having a stiffness of 0.8 N/25 mm or more is used in the method for cleaning a screen printing plate of the invention, even when the width of the pressure-sensitive adhesive sheet for removing a solvent-containing substance is so broad as 1000 mm or more, deformation (creases, folds, etc.) of the pressure-sensitive adhesive sheet for removing a solvent-containing substance is difficult to occur and thus the pressure-sensitive adhesive sheet for removing a solvent-containing substance can be cleanly or closely adhered to the back of the screen printing plate without resulting in uneven adhesion, whereby the solvent-containing substance such as a paste turning about the back of the screen printing plate can be efficiently removed.

Since the pressure-sensitive adhesive sheet for removing a solvent-containing substance of the invention possesses the above constitution, the pressure-sensitive adhesive sheet for removing a solvent-containing substance can be cleanly adhered to the back of a screen printing plate without resulting in uneven adhesion, so that the organic solvent-containing substance can be efficiently removed.

The present invention will now be illustrated in more detail with reference to Examples but the invention is not limited by these Examples. Incidentally, the terms "part(s)" and "%" used hereinafter mean "part(s) by weight" and "% by weight", respectively.

### (Preparation Example 1 of pressure-sensitive adhesive composition)

To 100 parts (solid matter) of a solution of a carboxyl group-containing acrylic copolymer [a copolymer of butyl acrylate/acrylonitrile/acrylic acid = 85:15:2.5 (ratio by weight)] were added 10 parts of EDP-1100 [trade name; manufactured by Asahi Denka Co., Ltd., a polyoxypropylene condensate of ethylenediamine as an amine-based compound containing plural hydroxyl groups]], and 15 parts of Coronate L [trade name; manufactured by Nippon Polyurethane Industry Co., Ltd., a polyisocyanate-based compound], followed by well mixing with a solvent (ethyl acetate) to prepare a pressure-sensitive adhesive composition (sometimes referred to as "Pressure-sensitive Adhesive A").

### EXAMPLE 1

On one side of a biaxially stretched polypropylene film (thickness: 40 µm) as a substrate was applied Pressure-sensitive Adhesive A obtained in Preparation Example 1 of pressure-sensitive adhesive composition so that the thickness after drying is 8 µm, followed by 3 minutes of drying or curing at 90°C to form a pressure-sensitive adhesive layer, whereby a pressure-sensitive adhesive sheet (width: 1000 mm) was manufactured.

### EXAMPLE 2

A pressure-sensitive adhesive sheet (width: 1000 mm) was manufactured in the same manner as in Example 1 except that polyethylene terephthalate film (thickness: 38 µm) was used as a substrate.

### EXAMPLE 3

A pressure-sensitive adhesive sheet (width: 1000 mm) was manufactured in the same manner as in Example 1 except that polyethylene film (thickness: 60 µm) was used as a substrate.

### EXAMPLE 4

A pressure-sensitive adhesive sheet (width: 1000 mm) was manufactured in the same manner as in Example 1 except that non-stretched polypropylene film (thickness: 40 µm) was used as a substrate and the thickness of the pressure-sensitive adhesive layer was changed to 10 µm.

### EXAMPLE 5

A pressure-sensitive adhesive sheet (width: 1000 mm) was manufactured in the same manner as in Example 1 except that a film (thickness: 40 µm) formed by blending polypropylene and polyethylene (polypropylene/poly-ethylene (ratio by weight) = 80/20) was used as a substrate.

### EXAMPLE 6

A pressure-sensitive adhesive sheet (width: 1000 mm) was manufactured in the same manner as in Example 1 except that polyethylene film (thickness: 100 µm) was used as a substrate.

### COMPARATIVE EXAMPLE 1

A pressure-sensitive adhesive sheet (width: 1000 mm) was manufactured in the same manner as in Example 1 except that biaxially stretched polypropylene film (thickness: 20 µm) was used as a substrate.

### COMPARATIVE EXAMPLE 2

A pressure-sensitive adhesive sheet (width: 1000 mm) was manufactured in the same manner as in Example 1 except that polyethylene terephthalate film (thickness: 12 µm) was used as a substrate.

### (Evaluation)

For each of the pressure-sensitive adhesive sheets (pressure-sensitive adhesive sheets for removing a solvent-containing substance) obtained in Examples 1 to 6 and Comparative Examples 1 and 2, stiffness, difference between a maximum value and a minimum value of the thickness in the crosswise direction, adhesive force, solvent-absorbed amount, adhesive force after absorption of solvent, and cleaning ability were measured by the following measuring methods and evaluating method. The results are shown in Table 1.

### (Method of measuring stiffness)

A pressure-sensitive adhesive sheet for removing a solvent-containing substance is cut into a size of a length in the machine direction of 65.8 mm and a length in the crosswise direction of 25 mm. Thereafter, edge parts in the machine direction of the cut pressure-sensitive adhesive sheet for removing a solvent-containing substance (65.8 mm x 25 mm) are overlapped each other in a width of 3 mm in a form that a pressure-sensitive adhesive layer faces an inner side to form a cylindrical shape. The lap part is adhered with "No. 500" (trade name; manufactured by Nitto Denko Corporation; a double-sided adhesive tape; length of 25 mm, width of 3 mm), whereby there is manufactured a cylindrical article (diameter of 20 mm, height of 25 mm) having a cylindrical shape where the edge parts in the machine direction of the pressure-sensitive adhesive sheet for removing a solvent-containing substance having the above-mentioned size are overlapped each other in a width of 3 mm, the pressure-sensitive adhesive layer facing an inner side.

Subsequently, after the above cylindrical article (diameter of 20 mm, height of 25 mm) is allowed to stand under an atmosphere of a temperature of 23±2°C and a relative humidity of 50±5% for 24 hours, it is placed at a predetermined position in a form that round opening sides of a cylindrical one are positioned up and down under conditions of a temperature of 23±2°C and a relative humidity of 50±5% and the cylindrical article is compressed from one round opening side of cylindrical one in the cylindrical article at a compression rate of 10 mm/min, whereby a stress (or strength) (N/25 mm) is measured at the time when compressed and a maximum value of the stress (or strength) is determined.

### (Method of measuring difference between maximum value and minimum value of substrate thickness in crosswise direction)

The thickness of the substrate in the pressure-sensitive adhesive sheet for removing a solvent-containing substance is measured at five points in almost equal intervals in the crosswise direction by means of a dial gauge of 1/1000 mm, whereby a maximum value and a minimum value of the thickness on that occasion are determined and an absolute value of the difference between them (namely, the maximum value - the minimum value) is calculated. Thus, the difference between a maximum value and a minimum value of thickness in crosswise direction of the substrate (difference in substrate thickness) is determined.

In this connection, as the substrate for use in the measurement, a substrate before forming a pressure-sensitive adhesive layer or the like, a substrate obtained by removing a pressure-sensitive adhesive layer from a pressure-sensitive adhesive sheet for removing a solvent-containing substance with a solvent or the like, and the like can be used.

### (Method of measuring adhesive force)

After a pressure-sensitive adhesive sheet for removing a solvent-containing substance is allowed to stand under a condition of 23±2°C x 48 hours, it is allowed to stand in an atmosphere of a temperature of 23±2°C (23°C plus/minus 2°C) and a relative humidity of 50±5% (50% plus/minus 5%) for 24 hours as a treatment before a measurement of a sample. Then, the pressure-sensitive adhesive sheet for removing a solvent-containing substance cut into a size of 25 mm x 150 mm is attached under pressure to a material to be attached (SUS 430BA) by a reciprocating motion of a 2-kg roller. After 1 minute, the pressure-sensitive adhesive sheet for removing a solvent-containing substance is peeled off from the material to be attached, under an atmosphere of a temperature of 23±2°C and a humidity of 50±5%RH using a tensile testing machine at a tension rate of 300 mm/min and a peeling angle of 180°, whereby an adhesive force (N/25 mm) is determined.

### (Method of measuring solvent-absorbed amount)

A pressure-sensitive adhesive sheet for removing a solvent-containing substance is cut into a size of 20 mm x 50 mm and its weight is measured. The pressure-sensitive adhesive sheet for removing a solvent-containing substance weighed beforehand is immersed for 1 second in a mixed solvent of diethylene glycol monobutyl ether acetate/diethylene glycol monobutyl ether [9/1 (ratio by weight)] which is a solvent for screen printing inks and taken out. Immediately, the solvent attached on the surface of the pressure-sensitive adhesive sheet for removing a solvent-containing substance is wiped off with waste cloth and then the weight is again measured, whereby an increase of the weight per unit area (g/m²) is calculated. In this connection, measuring conditions are a temperature of 23±2°C and a humidity of 50±5%RH.

### (Method of measuring adhesive force after solvent absorption)

A mixed solvent of diethylene glycol monobutyl ether acetate/diethylene glycol monobutyl ether [9/1 (ratio by weight)] which is a solvent for screen printing inks is applied in an amount of 5 g/m² on a film made of polyethylene terephthalate by means of a wire bar. Thereto is adhered a pressure-sensitive adhesive sheet for removing a solvent-containing substance cut into a size of 25 mm x 150 mm. After the above mixed solvent is absorbed in the pressure-sensitive adhesive layer of the pressure-sensitive adhesive sheet for removing a solvent-containing substance in an amount of 5 g/m², the pressure-sensitive adhesive sheet for removing a solvent-containing substance is peeled off and the pressure-sensitive adhesive sheet for removing a solvent-containing substance is used as a measuring sample. On the measuring sample, an adhesive force is measured by the same method as above (the method of measuring adhesive force), whereby an adhesive force (N/25 mm) is determined. Specifically, the measuring sample is attached under pressure to a material to be attached (SUS 430BA) by a reciprocating motion of a 2-kg roller. After 1 minute, the pressure-sensitive adhesive sheet for removing a solvent-containing substance is peeled off from the material to be attached, under an atmosphere of a temperature of 23±2°C and a humidity of 50±5%RH using a tensile testing machine at a tension rate of 300 mm/min and a peeling angle of 180°C, whereby an adhesive force (N/25 mm) is determined.

### (Method of evaluating cleaning ability)

An operation of adhering a pressure-sensitive adhesive sheet for removing a solvent-containing substance to the back of a screen plate about which a paste turned after used at a certain number of times and subsequently peeling it off was conducted, whereby the screen plate was cleaned. Then, cleaning ability was evaluated according to the following standards.

### Evaluation standards for cleaning ability

○ : A pressure-sensitive adhesive sheet for removing a solvent-containing substance could be cleanly adhered to the back of a screen plate and the plate could be satisfactorily cleaned.
× : A pressure-sensitive adhesive sheet for removing a solvent-containing substance was deformed and could not be cleanly adhered to the back of a screen plate. Also, there was observed uneven removal and thus the plate could be not satisfactorily cleaned.

**Table 1**

| | Example | | | | | | Comparative Example | |
|---|---|---|---|---|---|---|---|---|
| | 1 | 2 | 3 | 4 | 5 | 6 | 1 | 2 |
| Stiffness (N/25 mm) | 4.7 | 5.2 | 1.8 | 1.4 | 1.6 | 6.7 | 0.74 | 0.32 |
| Difference in substrate thickness (µm) | 3 | 2 | 6 | 3 | 5 | 6 | 2 | 1 |
| Adhesive force (cN/25 mm) | 190 | 72 | 220 | 285 | 200 | 330 | 150 | 200 |
| Solvent-absorbed amount (g/m²) | 12.2 | 12.1 | 12.1 | 12.0 | 12.5 | 12.0 | 12.5 | 12.5 |
| Adhesive force after solvent absorption (cN/25 mm) | 6 | 15 | 10 | 30 | 6 | 10 | 30 | 28 |
| Cleaning ability | ○ | ○ | ○ | ○ | ○ | ○ | × | × |

Form Table 1, since the pressure-sensitive adhesive sheets for removing a solvent-containing substance related to the Examples had a stiffness of 0.8 N/25 mm or more, any deformation such as creases or folds were not observed and thus it was confirmed that they could be cleanly adhered to the back of a screen plate and the plate could be satisfactorily cleaned.

While the invention has been described in detail and with reference to specific embodiments thereof, it will be apparent to one skilled in the art that various changes and modifications can be made therein without departing from the spirit and scope thereof.

## Claims

1. A pressure-sensitive adhesive sheet for removing a solvent-containing substance comprising a substrate and a pressure-sensitive adhesive layer formed on at least one side of the substrate, wherein a maximum value of a stress at the time when a cylindrical article (diameter of 20 mm, height of 25 mm) is compressed from one round opening side of cylindrical one at a compression rate of 10 mm/min under conditions of a temperature of 23±2°C and a relative humidity of 50±5% is 0.8 N/25 mm or more, the cylindrical article being obtained by fixing the pressure-sensitive adhesive sheet for removing a solvent-containing substance (65.8 mm x 25 mm) in a cylindrical state where edge parts thereof in the machine direction are overlapped each other in a width of 3 mm.

2. The pressure-sensitive adhesive sheet for removing a solvent-containing substance according to claim 1, wherein an average thickness of the substrate is 120 µm or less and a difference between a maximum value and a minimum value of the thickness in the crosswise direction is 6 µm or less.

3. The pressure-sensitive adhesive sheet for removing a solvent-containing substance according to claim 1 or 2, wherein a length in the crosswise direction is 1000 mm or more.

4. The pressure-sensitive adhesive sheet for removing a solvent-containing substance according to any one of claims 1 to 3, which is used as a pressure-sensitive adhesive sheet for cleaning a screen printing plate.

5. A method for cleaning a screen printing plate which comprises removal of a solvent-containing substance deposited on the back of the screen printing plate by adhering the pressure-sensitive adhesive sheet for removing a solvent-containing substance according to any one of claims 1 to 4 to the back of the screen printing plate in a form that the surface of a pressure-sensitive adhesive layer of the sheet comes into contact therewith and subsequently peeling the sheet off.
